# EUROPÄISCHE PATENTSCHRIFT

(11) **EP 0 447 516 B1**
(45) Veröffentlichungstag und Bekanntmachung des Hinweises auf die Patenterteilung: **23.08.1995**
(21) Anmeldenummer: 90914507.0
(22) Anmeldetag: 05.10.1990
(51) Int. Cl.: G01F 23/28

(54) **AUS BAUELEMENTEN ZUSAMMENSETZBARES FÜLLSTANDSMESSGERÄT**
LEVEL INDICATOR COMPRISING SEVERAL SEPARABLE COMPONENTS
INDICATEUR DE NIVEAU FORME DE COMPOSANTS ASSEMBLABLES

(30) Priorität: 06.10.1989 DE 3933474
(43) Veröffentlichungstag der Anmeldung: 25.09.1991
(73) Patentinhaber: Endress u. Hauser GmbH u. Co., D-79689 Maulburg (DE)
(72) Erfinder: SCHWALD, Rolf, D-7860 Schopfheim 3 (DE); STEINEBRUNNER, Edwin, D-7868 Todtnau 1 (DE)
(74) Vertreter: Leiser, Gottfried, Dipl.-Ing.
(86) Internationale Anmeldenummer: DE9000761
(87) Internationale Veröffentlichungsnummer: WO9105226

(56) Entgegenhaltungen:
- WO-A-84/00607
- DE-A- 3 416 254
- DE-U- 8 630 763
- GB-A- 2 195 445

## Beschreibung

Die Erfindung betrifft ein Füllstandsmeßgerät zum Messen des Füllstands in einem Behälter mit einem Schall- oder Ultraschallwandler, welcher einen Sendeimpuls auf das Füllgut in dem Behälter richtet und das am Füllgut reflektierte Echosignal empfängt, und mit einer elektronischen Schaltung, welche den Schall- oder Ultraschallwandler zu Schwingungen erregt und das empfangene Echosignal in ein elektrisches Signal umwandelt und zu einem Auswertegerät überträgt sowie die für die Funktion des Füllstandsmeßgeräts notwendige Energie von dem Auswertegerät empfängt, wobei der Schall- oder Ultraschallwandler eine von einem Gehäuse umschlossene erste Funktionseinheit und die elektronische Schaltung eine von einem Gehäuse umschlossene zweite Funktionseinheit bilden.

Bei einem aus dem Dokument DE-U1-86 30 763.0 bekannten Füllstandsmeßgerät dieser Art, das insbesondere zur Verwendung bei aggressiven Medien bestimmt ist, ist das den Schall- oder Ultraschallwandler umschließende Gehäuse ein topfförmiges Kunststoffteil, das mittels eines angeformten Ringansatzes an der dem Behälter zugewandten Fläche eines Flansches befestigt ist, so daß es den Schall- oder Ultraschallwandler behälterseitig umschließt. Das die elektronische Schaltung umschließende Gehäuse ist auf der dem Behälter abgewandten Seite des Flansches befestigt, und die elektronische Schaltung ist mit dem Schall- oder Ultraschallwandler durch eine Leitung verbunden, die durch den Flansch hindurchgeführt ist. Zur Befestigung des Füllstandsmeßgeräts am Behälter wird der Flansch mit einem Gegenflansch verbunden, der eine kreiszylindrische Behälteröffnung umgibt, durch die dann das Wandlergehäuse in den Innenraum des Behälters ragt. Bei diesem Füllstandsmeßgerät ist zwar das Wandlergehäuse ein einfaches und billiges Kunststoffteil, doch erfüllt das Füllstandsmeßgerät wegen der exponierten Lage des verletzlichen Wandlergehäuses nicht die Anforderungen, die für den Einsatz in explosionsgefährdeten Bereichen gestellt werden. Ferner ist der Flansch, der auf der einen Seite das Wandlergehäuse mit dem Schall- oder Ultraschallwandler und auf der anderen Seite das Gehäuse mit der elektronischen Schaltung trägt, ein integrierter Bestandteil des Füllstandsmeßgeräts.

In ähnlicher Weise ist ein aus dem Dokument GB-A-2 195 445 bekanntes Füllstandsmeßgerät gebildet und montiert, jedoch mit dem Unterschied, daß der Schall- oder Ultraschallwandler in einer im Flansch gebildeten kreiszylindrischen Ausnehmung angeordnet ist, deren Boden die Membran des Schall- oder Ultraschallwandlers bildet. Somit ist die Membran einstückig mit dem Flansch ausgebildet, so daß dem Innenraum des Behälters eine homogene durchgehende Fläche zugewandt ist. Auch in diesem Fall bildet der Flansch einen integrierten Bestandteil des Füllstandsmeßgeräts, dessen Herstellung wegen der erforderlichen Präzisionsverarbeitung des metallischen Flansches sehr aufwendig ist. Zwar könnte das gleiche Füllstandsmeßgerät auch in nicht explosionsgefährdeten Bereichen verwendet werden, doch wären dort die erheblichen Herstellungskosten nicht gerechtfertigt.

Diese bekannten Füllstandsmeßgeräte sind somit jeweils für einen bestimmten Verwendungszweck ausgebildet; sie lassen sich nicht ohne weiteres an einen anderen Verwendungszweck anpassen.

Aufgabe der Erfindung ist die Schaffung eines Füllstandsmeßgeräts der eingangs angegebenen Art, das kostengünstig herstellbar ist und für unterschiedliche Anwendungen, insbesondere auch bei aggressiven Medien oder in explosionsgefährdeten Bereichen, geeignet ist.

Zur Lösung dieser Aufgabe ist das Füllstandsmeßgerät nach der Erfindung durch die folgenden Merkmale gekennzeichnet:
a) das die elektronische Schaltung umschließende Gehäuse ist eine Haube, die lösbar mit dem Gehäuse des Schall- oder Ultraschallwandlers verbunden ist;
b) das Gehäuse des Schall- oder Ultraschallwandlers ist mittels eines Überwurfflansches, der einen sich von der Mantelfläche des Gehäuses radial nach außen erstreckenden Bund umschließt, an einer Wand des Behälters befestigt;
c) der Schall- oder Ultraschallwandler ist schallentkoppelt in einer im Gehäuse geformten Mulde angeordnet;
d) der Schall- oder Ultraschallwandler ist auf seiner dem Füllgut abgewandten Seite von einer Stahlplatte abgedeckt, welche sich an den Innenraum des Gehäuses durchdringenden, an einer Ringzone des Gehäuses angeformten Stützen abstützt;
e) an der Haube ist ein Anschlußraum angeformt, in dem elektrische Anschlußelemente angeordnet sind und der durch einen Deckel verschließbar ist.

Im Gegensatz zu den Füllstandsmeßgeräten des Standes der Technik, bei denen der Befestigungsflansch ein wesentlicher integrierter Bestandteil des Geräts ist, besteht das erfindungsgemäße Füllstandsmeßgerät aus zwei Funktionseinheiten, deren Gehäuse unabhängig von einem Befestigungsflansch ausgebildet und direkt miteinander lösbar verbunden sind. Das Füllstandsmeßgerät kann daher ohne den Befestigungsflansch vollständig zusammengebaut werden und wahlweise auch auf andere Weise als durch Flanschbefestigung am Behälter angebracht werden. Die Gehäuse können auf einfache und kostengünstige Weise hergestellt werden, vorzugsweise als Kunststoff-Spritzteile. Bei geeigneter Wahl des Kunststoffs ist das Füllstandsmeßgerät zur Verwendung bei aggressiven Medien geeignet. Der Schall- oder Ultraschallwandler liegt geschützt in der im Gehäuse geformten Mulde, die zugleich eine gute Körperschallentkopplung zwischen dem Schall- oder Ultraschallwandler und dem mit dem Befestigungsflansch und der Behälterwand in Berührung stehenden äußeren Teil des Wandlergehäuses ergibt. Die Stahlplatte, die auf der dem Füllgut abgewandten Seite des Schall- oder Ultraschallwandlers angebracht ist, verhindert eine übermäßige Deformation der Wandlermembran bei einem plötzlichen Druckanstieg im Behälter. Dadurch ist das Füllstandsmeßgerät auch für einen Einsatz in explosionsgefährdeten Bereichen geeignet.

Vorteilhafte Ausgestaltungen undd Weiterbildungen der Erfindung sind in den Unteransprüchen gekennzeichnet.

Ein Ausführungsbeispiel der Erfindung wird anhand der Zeichnung beschrieben. In der Zeichnung zeigen:
- Fig. 1: einen Schnitt durch ein Füllstandsmeßgerät nach der Erfindung und
- Fig. 2: eine Draufsicht auf das Wandlergehäuse des Füllstandsmeßgeräts von Fig. 1.

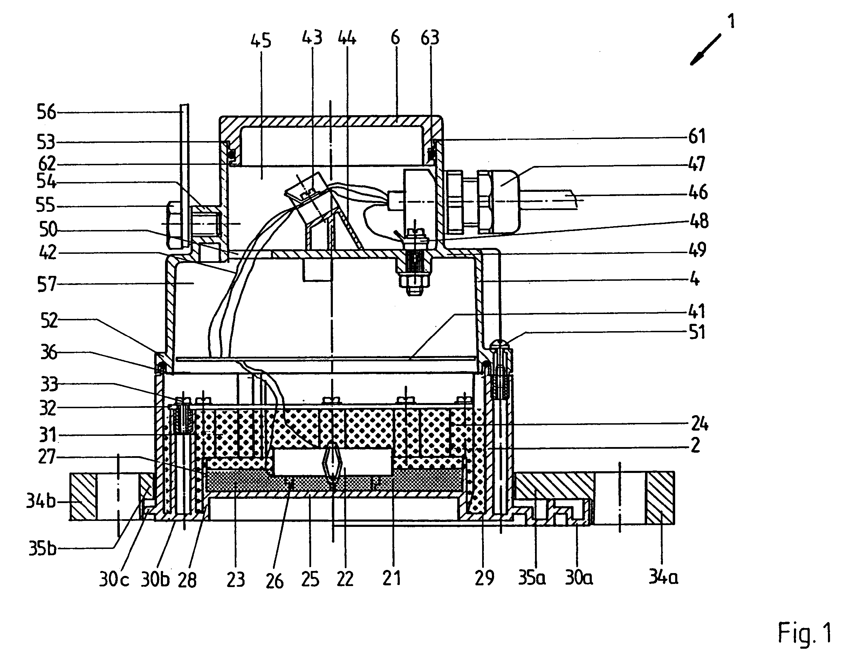

In Fig. 1 ist ein Füllstandsmeßgerät 1 dargestellt, das ein Gehäuse 2, eine Haube 4 und einen Deckel 6 aufweist.

In Inneren des Gehäuses 2 ist ein Sende- und Empfangswandler 21 untergebracht. Er erzeugt einen auf die Oberfläche des zu messenden Füllgutes gerichteten Sendeimpuls und empfängt das von der Oberfläche des Füllgutes reflektierte Echo. Der Sende- und Empfangswandler 21 besteht in bekannter Weise aus einem piezokeramischen Element 22, einer Anpaßschicht 23, einer Dämpfungsschicht 24 und einer Membran 25. Die Schichten 23, 24 bestehen aus einem Silikonelastomer. Das piezokeramische Element 22 steht über Distanzstücke 26 mit der Membran 25 in Verbindung. Zum Schutz der Membran 25 ist diese in bekannter Weise gegenüber dem dem Füllgut zugewandten ende des Gehäuses 2 ein Stück zurückversetzt.

Um eine Körperschallentkopplung zwischen dem Sende- und Empfangswandler 21 und dem Gehäuse 2 zu erzielen, ist der Wandler 21 nicht unmittelbar mit der Wand des Gehäuses 2 verbunden, sondern innerhalb einer zylindrischen Mulde 27 angeordnet, welche sich axialer Richtung von der Membran 25 erstreckt und eine Lage koaxial zur Symmetrieachse des Gehäuses 2 einnimmt. Die Mulde 27 und das Gehäuse 2 sind lediglich über einen kurzen zylindrischen Abschnitt 28 und eine ringzylindrische Zone 29 miteinander verbunden.

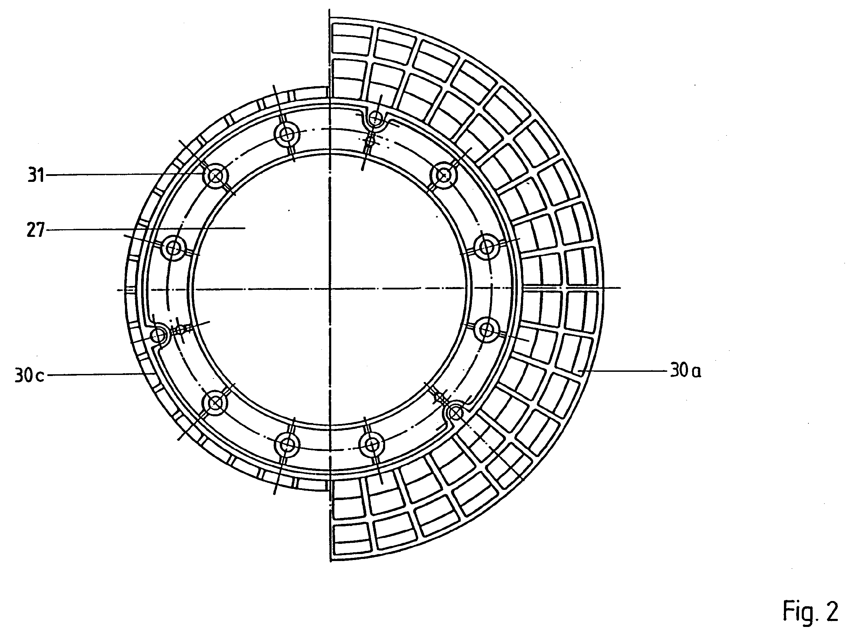

In Inneren des Gehäuses 2 sind weiter zylindrische Stützen 31 angeordnet. Die zylindrischen Stützen 31 sind an der Ringzone 29 angeformt und erstrecken sich in gleichem Abstand voneinander, auf einem Lochkreis angeordnet, entlang der inneren Mantelfläche des Gehäuses 2. Dabei nehmen sie eine solche Lage ein, daß sie in keiner räumlichen Verbindung zu der Mantelfläche des Gehäuses 2 stehen (Fig. 2). An ihrem der Ringzone 29 abgewandten Ende sind die zylindrische Stützen 31 von einem Innengewinde durchdrungen.

Das Innere des Gehäuses 2 ist fast vollkommen von der Dämpfungsschicht 24 ausgefüllt. Die Oberseite der Dämpfungsschicht 24 nimmt eine Lage ein, die etwa mit dem Ende der Stützen 31 zusammenfällt. Soll das Füllstandsmeßgerät 1 in einen Behälter eingesetzt werden, dessen innerer Druck über dem der normalen Atmosphäre liegt, wird auch die Membran 25 diesem Druck ausgesetzt. Um ein Durchbiegen der Membran 25 zu verhindern, ist der Sende- und Empfangswandler 21 durch eine Stahlplatte 32 abgeschlossen. Die Stahlplatte 32 liegt auf der Dämpfungsschicht 24 auf und ist mittels Schraubverbindungen 33 an den zylindrischen Stützen 31 befestigt. Die Stahlplatte 32 nimmt dann den Innendruck des Behälters über die Membran 25 auf und verhindert außerdem, daß Schwingungsenergie des piezokeramischen Elementes 22 durch die Dämpfungsschicht 24, nach der der Membran 25 abgewandten Seite abgestrahlt wird.

Die Mulde 27 erstreckt sich räumlich derart, daß in ihr, je nach Anwendungszweck, verschiedenartige piezokeramische Elemente, von einer Anpaß- und Dämpfungsschicht umgeben, Platz finden.

Das Gehäuse 2 ist in bekannter Weise als Spritzteil aus einem thermoplastischen und chemisch beständigen Kunststoff, z. B. aus Polyvinylidenfluorid hergestellt. Um ein solches Kunststoffteil in einer explosiblen Atmosphäre einsetzen zu könne, müssen Maßnahmen getroffen sein, um ein statische Aufladung zu verhindern. An dem Gehäuse 2 ist an der dem Füllgut zugewandten Seite eine Dichtleiste 30a bzw. 30b angeordnet. Die Dichtleiste 30a bzw. 30b hat zur Aufgabe, die Öffnung einer das Füllgut umschließenden Wandung, durch welche das Füllstandsmeßgerät 1 mit dem Füllgut in Verbindung tritt, unter Einschluß einer ringförmigen flachen Dichtung abzuschließen, wenn das Füllstandmeßgerät 1 an der Wandung befestigt wird.

Die Gestaltung der Dichtleiste 30a, welche sich rechts von der Mantelfläche des Gehäuses 2 erstreckt, ist eine andere wie die jenige der Dichtleiste 30b, welche sich auf der linken Seite des Gehäuses 2 erstreckt. Damit soll dargestellt werden, daß das Gehäuse 2 in zwei verschiedenen Varianten entsprechend dem Anwendungsfall ausgeführt werden kann. Die Gehäuseformen werden dabei durch ein in bekannter Weise, in die Spritzform eingebrachtes Einlegeteil hergestellt. Die Dichtleiste 30a erstreckt sich radial von der Mantelfläche des Gehäuses 2 nach außen. Wie aus Fig. 1 ersichtlich, ist die Dichtleiste 30a so gestaltet, daß sie von der Schulter 35a eines Überwurfflansches 34a umfaßt werden kann. Sie ist dabei so gestaltet, daß sie von beliebigen, d. h., nach in- und ausländischen Flanschnormen hergestellten Flanschen umfaßt werden kann. Die Dichtleiste 30a ist für große Nennweiten gedacht und aus zwei getrennten ringförmigen Dichtflächen gebildet, welche sich außerhalb der Mantelfläche des Gehäuses 2 erstrecken und gleichzeitig von der Schulter 35a des Flansches 34a umfaßt werden. Die Dichtleiste 30b ist im Inneren der Mantelfläche des Gehäuses 2 angeordnet und durch eine geschlossene, ringförmige Dichtfläche gebildet. Ein Bund 30c des Gehäuses 2, welcher einer Schulter 35b eines Überwurfflansches 34b gegenüberliegt und von ihr umfaßt wird, erstreckt sich radial anschließend an die Dichtleiste 30b von der Mantelfläche des Gehäuses 2 nach außen.

Für die kleineren Nennweiten genügt eine Ausführung des Gehäuses 2 mit der dichtleiste 30b.

Zur Verhinderung der durch Reibung verursachten statischen Aufladung sind die Dichtleisten 30a, 30b durch Zwischenwände und Aussparungen unterbrochen, so, daß nur kleine, eine Aufladung verhindernde, durchgehende Flächen vorhanden sind. In Fig. 2 ist aufgezeigt, wie diese angeformten Teile durch Einfügung von Rippen und Ausbrüchen gestaltet sind.

Die Haube 4 ist ebenfalls als Spritzteil aus einem thermoplastischen Kunststoff, vorteilhaft aus einem Polybutylenterephtalat hergestellt. In ihrem Inneren ist eine Leiterplatte 41 angeordnet. Auf der Leiterplatte sind (nicht dargestellt) die elektronischen Bauelemente angeordnet, welche die elektronische Schaltung des Füllstandsmeßgerätes 1 bilden. Die elektronischen Teile sind durch (nicht dargestellte) Leiterbahnen elektrisch miteinander verbunden. Weiter ist die Leiterplatte 41 durch eine Verbindungsleitung 42 mit Anschlußklemmen 43 verbunden, welche auf einem Sockel 44 angeordnet in den Anschlußraum 45 ragen. Der Sockel 44 ist so gestaltet, daß die Klemmenleiste der Anschlußklemme 43 in einem spitzen Winkel zur Symmetrieachse der Haube 4 steht, wodurch das Anscließen der elektrischen Leitung in dem Anschlußraum 45 wesentlich erleichtert wird. An den Klemmen 43 ist das Ansclußkabel 46 angeschlossen, welche das Füllstandsmeßgerät 1 mit einem auswertegerät verbindet und über welches die von dem Füllstandsmeßgerät 1 ermittelten Meßwerte zum Auswertegerät übertragen werden und auch die für die Funktion des Füllstandsmeßgerätes 1 notwendige Energie von dem Auswertegerät übertragen wird. Mittels einer PG-Verschraubung 47 wird das Anschlußkabel 46 in den Anschlußraum 45 eingeführt und die Durchführung abgeschlossen.

Der Anschlußraum 45 weist noch eine Masseanschlußklemme 48 auf. Diese ist als eine die Zwischenwand 49 durchdringende Schraubverbindung gestaltet. Die Zwischenwand 49 weist noch einen weiteren Durchbruch 50 auf, welcher der Durchführung der elektrischen Verbindungsleitung 42 von der Leiterplatte 41 zu den Anschlußklemmen 43 dient. Zur Verbindung mit dem Gehäuse 2 durchdringt eine Schraubverbindung 51 einen an der Haube 4 angeformten Bund. Die dichte Verbindung zwischen dem Gehäuse 2 und der Haube 4 wird dadurch erreicht, daß das Gehäuse 2 einen ringförmigen Steg 36 aufweist und an der Haube 4 ein Bund 52 die Mantelfläche umläuft, der auf seiner dem Gehäuse 2 zugewandten Seite von einer Nut durchbrochen ist, welche den Steg 36 umschließt.

Der Anschlußraum 45 ist auf der der Membran 25 abgewandten Seite mittels des Deckels 6 verschlossen. Dabei stützt sich der Deckel 6 an einem Bund 61 ab, welcher der ringförmigen Stirnfläche 53 der Haube 4 gegenüberliegt. Zur Abdichtung des Deckels 6 in der Haube 4 ist an dem zylindrischen Bereich 62 eine die Mantelfläche durchbrechende, umlaufende Nut angeformt, in welcher eine ringförmige Dichtung 63 angeordnet ist. Die ringförmige Dichtung 63 kann aus einem handelsüblichen O-Ring gebildet sein. Die Haube 4 ist so gestaltet, daß das Füllstandsmeßgerät 1 wiederum in zwei verschiedenen Ausführungsformen gestaltet werden kann. Für den Einsatz in normaler Atmosphäre ist die Haube 4 so gestaltet, wie es soeben dargestellt wurde. Für den Einsatz in einem explosiblen Medium, ist es jedoch erforderlich, die stromführenden Teile der Leiterplatte 41 hermetisch von der Außenwelt abzuschließen. Dazu wird eine handelsübliche Vergußmasse 57 bei geöffnetem Deckel 6 durch die Aussparung 50 in den Innenraum der Haube 4 gefüllt, bis der Innenraum bis zur Trennwand 49 gänzlich gefüllt und die auf der Leiterplatte 41 angeordneten elektrischen Bauelemente einschließlich der Leiterplatte von der Vergußmasse umgeben sind.

An der Außenwand der Haube 4 sind oberhalb der Trennwand 49 zwei Buchsen 54 angeformt, welche sich diametral gegenüberliegen. Der besseren Darstellung wegen, ist in Fig. 1 nur eine der beiden Buchsen 54 gezeigt. Die Buchsen 54 sind von einem Gewinde durchdrungen und bilden zusammen mit einer Schraube 55 eine Schraubverbindung, durch welche ein Bügel 56 an der Haube 4 befestigt ist. Mit Hilfe des Bügels 56 ist es möglich, den Füllstandssensor 1 an der Behälterwand oder der Decke eines Behälters oder über einem offenen Gerinne in alle Richtungen ausgelenkt aufzuhängen, wobei selbstverständlich die Flanschverbindung 34a bzw. 34b entfällt.

## Patentansprüche

1. Füllstandsmeßgerät zum Messen des Füllstands in einem Behälter mit einem Schall- oder Ultraschallwandler (21), welcher einen Sendeimpuls auf das Füllgut in dem Behälter richtet und das am Füllgut reflektierte Echosignal empfängt, und mit einer elektronischen Schaltung (41), welche den Schall- oder Ultraschallwandler (21) zu Schwingungen erregt und das empfangene Echosignal in ein elektrisches Signal umwandelt und zu einem Auswertegerät überträgt sowie die für die Funktion des Füllstandsmeßgeräts notwendige Energie von dem Auswertegerät empfängt, wobei der Schall- oder Ultraschallwandler (21) eine von einem Gehäuse (2) umschlossene erste Funktionseinheit und die elektronische Schaltung eine von einem Gehäuse umschlossene zweite Funktionseinheit bilden,
gekennzeichnet durch die folgenden Merkmale:
a) das die elektronische Schaltung (41) umschließende Gehäuse ist eine Haube (4), die lösbar mit dem Gehäuse (2) des Schall- oder Ultraschallwandlers (21) verbunden ist;
b) das Gehäuse (2) des Schall- oder Ultraschallwandlers (21) ist mittels eines Überwurfflansches (34a, 34b), der einen sich von der Mantelfläche des Gehäuses (2) radial nach außen erstreckenden Bund (30a, 30c) umschließt, an einer Wand des Behälters befestigt;
c) der Schall- oder Ultraschallwandler (21) ist schallentkoppelt in einer im Gehäuse (2) geformten Mulde (27) angeordnet;
d) der Schall- oder Ultraschallwandler (21) ist auf seiner dem Füllgut abgewandten Seite von einer Stahlplatte (32) abgedeckt, welche sich an den Innenraum des Gehäuses (2) durchdringenden, an einer Ringzone (29) des Gehäuses (2) angeformten Stützen (31) abstützt;
e) an der Haube (4) ist ein Anschlußraum (45) angeformt, in dem elektrische Anschlußelemente (43) angeordnet sind und der durch einen Deckel (6) verschließbar ist.

2. Füllstandsmeßgerät nach Anspruch 1, dadurch gekennzeichnet, daß der sich radial von der Mantelfläche des Gehäuses (2) nach außen erstreckende Bund als Dichtleiste (30a) ausgebildet ist, welche zwei getrennte, ringförmige Dichtflächen aufweist und von einer Schulter (35a) des Überwurfflansches (34a) umfaßt wird.

3. Füllstandsmeßgerät nach Anspruch 1, dadurch gekennzeichnet, daß das Gehäuse (2) eine innerhalb seiner Mantelfläche umlaufende ringförmige Dichtleiste (30b) aufweist, welche eine geschlossene ringförmige Dichtfläche bildet und an die sich der Bund (30c) anschließt, der sich radial von der Mantelfläche des Gehäuses (2) nach außen erstreckt und von einer Schulter (35b) des Überwurfflansches (34b) umfaßt wird.

4. Füllstandsmeßgerät nach Anspruch 2 oder 3, dadurch gekennzeichnet, daß die ringförmige Dichtleiste (30a bzw. 30b) durch Zwischenwände und Aussparungen unterbrochen ist.

5. Füllstandsmeßgerät nach einem der Ansprüche 1 bis 4, dadurch gekennzeichnet, daß die Stahlplatte (32) durch Schraubverbindungen (33) mit den Stützen (31) verbunden ist.

6. Füllstandsmeßgerät nach einem der Ansprüche 1 bis 5, dadurch gekennzeichnet, daß das Gehäuse (2) und die Haube (4) als Spritzteile aus einem thermoplastischen Kunststoff gebildet sind.

7. Füllstandsmeßgerät nach einem der Ansprüche 1 bis 6, dadurch gekennzeichnet, daß die im Inneren der Haube (4) angeordnete elektronische Schaltung auf einer Leiterplatte (41) gebildet ist.

8. Füllstandsmeßgerät Anspruch 7, dadurch gekennzeichnet, daß der Schall- oder Ultraschallwandler (21) mittels einer trennbaren elektrischen Leitung (42) mit der Leiterplatte (41) und die Leiterplatte (41) weiter über die elektrischen Anschlußelemente (43) und ein Verbindungskabel (46) mit dem Auswertegerät in elektrischer Verbindung stehen.

## Claims

1. Level measuring device for measuring the level of a material within a container, comprising a sonic or ultrasonic transducer (21) which directs a transmitted pulse onto the surface of the material within the container and receives the echo signal reflected at the material, and an electronic circuit (41) which excites the sonic or ultrasonic transducer (21) to oscillations and converts the received reflected echo signal to an electrical signal which is transmitted to an evaluating device, the electronic circuit receiving the electrical energy necessary for the operation of the level measuring device from the evaluating device, wherein the sonic or ultrasonic transducer (21) forms a first functional unit surrounded by a housing (2) and the electronic circuit forms a second functional unit surrounded by a housing,
characterized by the following features:
a) the housing surrounding the electronic circuit (41) is a hood (4) which is connected detachably to the housing (2) of the sonic or ultrasonic transducer;
b) the housing (2) of the sonic or ultrasonic transducer (21) is secured to a wall of the container by means of a coupling flange (34a, 34b) which embraces a collar (30a, 30c) extending radially outwardly from the circumferential wall of the housing (2);
c) the sonic or ultrasonic transducer (21) is arranged in a sound-decoupled manner in a trough (27) formed in the housing (2);
d) the sonic or ultrasonic transducer (21) is covered on the side facing away from the material in the container by a steel plate (32) which is borne by supports (31) integrally formed with an annular zone (29) of the housing (2) and extending through the interior of the housing (2);
e) on the hood (4) a terminal space (45) is integrally formed in the interior of which electrical connecting elements (43) are arranged and which is adapted to be closed by a cover (6).

2. Level measuring device according to claim 1, characterized in that the collar extending radially outwardly from the circumferential wall of the housing (2) is formed as a sealing strip (30a) which includes two separate annular sealing surfaces and is embraced by a shoulder (35a) of the coupling flange (34a).

3. Level measuring device according to claim 1, characterized in that the housing (2) comprises an annular sealing strip (30b) extending around within its circumferential wall and to which the collar (30c) is joined which extends radially outwardly from the circumferential wall of the housing (2) and is embraced by a shoulder (35b) of the coupling flange (34b).

4. Level measuring device according to claim 2 or claim 3, characterized in that the sealing strip (30a or 30b, respectively) is interrupted by cutouts and webs.

5. Level measuring device according to any one of claims 1 to 4, characterized in that the steel plate (32) is connected by screw connections (33) to the supports (31).

6. Level measuring device according to any one of claims 1 to 5, characterized in that the housing (2) and the hood (4) are formed by injection molding from a thermoplastic material.

7. Level measuring device according to any one of claims 1 to 5, characterized in that the electronic circuit arranged in the interior of the hood (4) is formed on a printed circuit board (41).

8. Level measuring device according to claim 7, characterized in that the sonic or ultrasonic transducer (21) is electrically connected with the printed circuit board (41) by means of a detachable electrical line (41), and the printed circuit board (41) is electrically further connected via the electrical connecting elements (43) and a connecting cable (46) with the evaluating device.

## Revendications

1. Appareil de mesure du niveau de remplissage destiné à mesurer le niveau de remplissage d'un récipient, qui comprend un transducteur sonore ou ultrasonore (21) qui projette une impulsion d'emission sur la matière de remplissage contenue dans le récipient et reçoit le signal écho réfléchi sur la matière de remplissage, et un circuit électronique (41) qui excite le transducteur sonore ou ultrasonore (21) en vibrations et transforme le signal écho reçu en un signal électrique qu'il transmet à un appareil d'analyse, et qui reçoit de l'appareil d'analyse l'énergie nécessaire pour le fonctionnement de l'appareil de mesure du niveau de remplissage, le transducteur sonore ou ultrasonore (21) formant une première unité fonctionnelle enfermée dans un boîtier (2) et le circuit électronique formant une deuxième unité fonctionnelle enfermée dans un boîtier,
caractérisé par les caractéristiques suivantes :
a) le boîtier qui renferme le circuit électronique (41) est un capot (4) qui est relié de façon démontable au boîtier (2) du transducteur sonore ou ultrasonore (21) ;
b) le boîtier (2) du transducteur sonore ou ultrasonore (21) est fixé à une paroi du récipient au moyen d'une bride emboîtante (34a, 34b) qui entoure une collerette (30a, 30c) s'étendant radialement vers l'extérieur à partir de la surface de paroi latérale du boîtier (2) ;
c) le transducteur sonore ou ultrasonore (21) est disposé dans une cuvette (27) formée dans le boîtier (2) et en est découplé acoustiquement ;
d) le transducteur sonore ou ultrasonore (21) est recouvert, sur son côté le plus éloigné de la matière de remplissage, par une plaque d'acier (32) qui prend appui sur des colonnettes (31) formées sur une zone annulaire (29) du boîtier (2) et qui traversent le volume intérieur du boîtier (2) ;
e) sur le capot (4), est formée une chambre de connexion (45) dans laquelle sont disposés des éléments de connexion électrique (43) et qui peut être fermée par un couvercle (6).

2. Appareil de mesure du niveau de remplissage selon la revendication 1, caractérisé en ce que la collerette s'étendant radialement vers l'extérieur à partir de la surface latérale du boîtier (2) forme un joint d'étanchéité (30a) qui présente deux surfaces d'étanchéité annulaires séparées et qu'un épaulement (35a) de la bride emboîtante (34a) vient emboîter.

3. Appareil de mesure du niveau de remplissage selon la revendication 1, caractérisé en ce que le boîtier (2) présente un joint d'étanchéité annulaire (30b) s'étendant le long de la périphérie à l'intérieur de sa surface de paroi latérale, qui forme une surface d'étanchéité annulaire fermée et à laquelle se raccorde la collerette (30c) qui s'étend radialement vers l'extérieur à partir de la surface de paroi latérale du boîtier (2) et qu'un épaulement (35b) de la bride emboîtante (34b) vient emboîter.

4. Appareil de mesure du niveau de remplissage selon la revendication 2 ou 3, caractérisé en ce que le joint d'étanchéité annulaire (30a ou 30b) est interrompu par des cloisons intermédiaires et des évidements.

5. Appareil de mesure du niveau de remplissage selon une des revendications 1 à 4, caractérisé en ce que la plaque d'acier (32) est réunie aux colonnettes (31) par des assemblages vissés (33).

6. Appareil de mesure du niveau de remplissage selon une des revendications 1 à 5, caractérisé en ce que le boîtier (2) et le capot (4) sont formés de pièces moulées par injection en résine synthétique thermoplastique.

7. Appareil de mesure du niveau de remplissage selon une des revendications 1 à 6, caractérisé en ce que le circuit électronique disposé à l'intérieur du capot (4) est formé sur un circuit imprimé (41).

8. Appareil de mesure du niveau de remplissage selon la revendication 7, caractérisé en ce que le transducteur sonore ou ultrasonore (21) est connecté électriquement au circuit imprimé (41) par une ligne électrique déconnectable (42) et le circuit imprimé (41) est connecté électriquement à l'appareil d'analyse par les éléments de connexion électrique (43) et un câble de branchement (46).
